# EUROPEAN PATENT APPLICATION

(11) **EP 1 801 622 A1**
(43) Date of publication of application: **27.06.2007**
(21) Application number: 05112671.2
(22) Date of filing: 21.12.2005
(51) Int. Cl.: G02B 3/14, G02B 1/06, G02B 26/02

(54) **Direct sealing of a liquid optical device**

(71) Applicant: Varioptic, 69007 Lyon (FR)
(72) Inventor: Lours, Thierry, 34670, BAILLARGUES (FR); Louart, Jean-Jacques, 69230, Saint Genis Laval (FR)
(74) Representative: de Beaumont, Michel

(57) **Abstract**

The invention concerns a method of manufacturing an optical device having a casing that defines a chamber containing first and second immiscible fluids moveable with respect to one another by electrowetting, said method comprising positioning a first transparent window in a first receiving means provided in said casing and directly sealing said first transparent window to said first receiving means by locally heating a region of said first transparent window in contact with said first receiving means to a first temperature to achieve a local softening of said region of said first transparent window.

## Description

### FIELD OF THE INVENTION

The present invention relates to a liquid optical device and a method of fabricating the same. In particular, the present invention relates to sealing a window to the device.

### BACKGROUND OF THE INVENTION

A number of embodiments of liquid optical devices, in particular variable focus liquid lenses, are described in commonly assigned European patent N°1166157. Figure 1 of the present application corresponds to figure 12 of that patent. As shown in figure 1, an optical lens comprises two isolating transparent plates 100 and 102. Plate 102 comprises a conical or cylindrical recess, with a side face 104 inclined with respect to the optical axis Δ of the device, and which receives a drop of an insulating liquid 106. The remainder of the chamber extending up to transparent plate 100 is filled with a second liquid 108, which is conductive. The liquids are immiscible, and have different refractive indexes but roughly the same density. A transparent electrode 110 is formed over the outer surface of transparent plate 102. Another electrode 112 is provided in contact with a liquid 108.

Due to the electrowetting effect, it is possible, by applying a voltage between electrode 110 and 112, to change the curvature of the interface between the first liquid 106 and the second liquid 108, from an initial concave shape as shown by line A, to a convex shape as shown by line B. Thus rays of light passing through the cell perpendicular to the plates 100 and 102 in the region of the drop 106 will be focused more or less depending on the voltage applied.

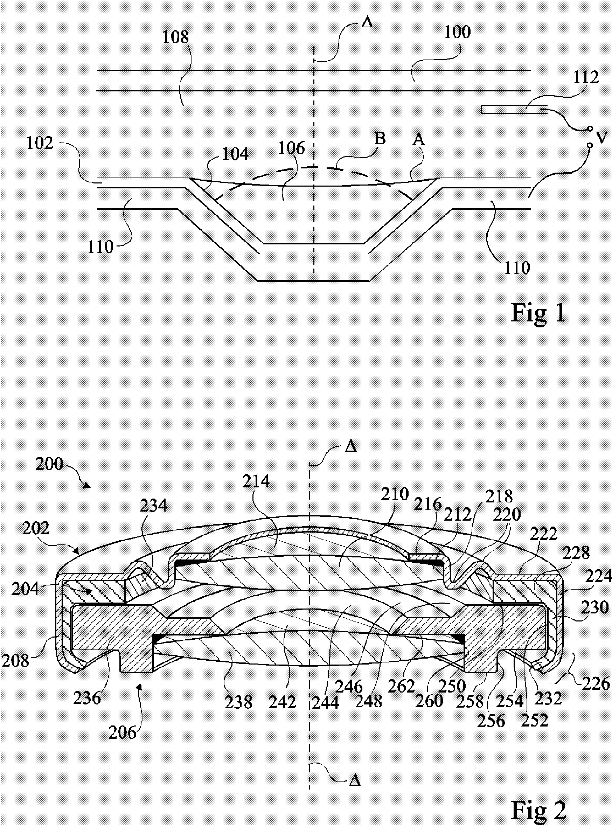

When manufacturing the liquid lens shown in figure 1, or similar electrowetting devices, it is important that the insulating and conducting liquids are tightly sealed within the device. Thus it is necessary for the glass plate 100 and transparent electrode 110 to be fixed to the housing of the optical device, and that a tight seal is formed at the contact points. It is also important that, during the manufacturing process, the optical properties of the transparent plate 100 and transparent electrode 110 are not altered. One solution might be to seal the transparent plates to the housing using a glue, however, this is disadvantageous. The conducting liquid is usually a saline solution, and the insulating liquid usually comprises additives to provide the required difference between the refraction indexes of the liquids, and these additives are corrosive. The corrosion leads to a deterioration of the interface between the glue and the housing, or to a complete degradation of the glue itself, in both cases resulting in a loss of tightness of the device. There is therefore a need for an improved method of fixing the transparent plates to the device.

Variable focus lenses can be integrated in more complex devices having fixed lenses. Optical systems such as oculars, lenses and more recently camera modules dedicated to digital imaging generally combine, to various degrees of complexity, thin and/or thick conventional fixed lenses, which are convex, concave, plan-convex, plan-concave, of positive or negative meniscus. Such a combination of lenses can reduce chromatic or geometric aberrations and allow the power of the lens to be increased.

Even more complex functions can be achieved when several sub-assemblies of fixed lenses are allowed to move along the optical axis, for example providing both zoom and auto-focus functions at the same time. However, when variable focus liquid lenses are combined in complex modules having fixed lenses, this results in an increase in length of the lens system along the optical axis, which is disadvantageous for many applications in which a small lens is required. Furthermore, a very tight alignment of the optical axis of each optical component is required which needs an expensive and sophisticated assembly bench. There is therefore a need for a compact optical device having accurately aligned lenses.

### SUMMARY OF THE INVENTION

It is an object of the present invention to provide a liquid optical device and a method of manufacturing the same which addresses some or all of the disadvantages discussed above.

According to a first aspect of the present invention there is provided a method of manufacturing an optical device having a casing that defines a chamber containing first and second immiscible fluids moveable with respect to one another by electrowetting, the method comprising positioning a first transparent window in a first receiving means provided in the casing, and directly sealing the first transparent window to the first receiving means by locally heating a region of the first transparent window in contact with the first receiving means to a first temperature to achieve a local softening of the region of the first transparent window.

According to one embodiment the local heating of the region of the first transparent window can comprises selectively heating the first receiving means to the first temperature.

According to further aspect of the present invention there is provided an optical device having an optical axis and containing first and second immiscible fluids moveable with respect to one another by electrowetting, the optical device comprising a casing comprising a receiving means for receiving a transparent window, the transparent window being directly sealed to the receiving means by locally heating a region of the transparent window in contact with the receiving means to a first temperature to achieve a local softening of the region.

According to one embodiment the transparent window is integrally formed or molded in place within the receiving means.

According to some embodiments the receiving means comprises a beveled surface that either faces into the casing or away from the casing.

Further objects, features and advantages of the present invention will become apparent from the following detailed description of exemplary preferred embodiments, when considered together with the accompanying figures of drawing.

### BRIEF DESCRIPTION OF THE DRAWINGS

In the drawings:
figure 1 illustrates schematically an embodiment of a known variable focus liquid lens;
figure 2 is a perspective view of a cross-section of an embodiment of a liquid optical device according to the present invention;
figure 3 is a cross-section illustrating the formation of a base portion according to an embodiment of the present invention;
figure 4A is a cross-section view of a first embodiment of a cap according to an embodiment of the present invention;
figure 4B is a cross-section view of a second embodiment of a cap according to an embodiment of the present invention;
figures 5A to 5E illustrate a variety of fixed lenses that can be incorporated in embodiments of liquid optical devices according to the present invention;
figure 6 is a cross-section view illustrating an alternative method for forming a base portion according to an embodiment of the present invention; and
figure 7 is a cross-section view illustrating an alternative method for forming a cap portion according to an embodiment of the present invention.

For clarity, throughout the figures, like reference numbers have been used for corresponding features. The figures are not drawn to scale.

### DETAILED DESCRIPTION OF THE INVENTION

Figure 2 illustrates a cross-section perspective view of an embodiment of a variable focus liquid device 200 comprising two fixed lenses and a variable liquid lens within the same unit, however the liquids are not shown. The lens 200 comprises a cap portion 202, a gasket 204 and a base portion 206, the cap portion 202 being placed over the base portion 206 but separated from it by gasket 204.

Cap portion 202 comprises a metal cap 208 formed from a thin sheet of conducting metal to which a circular glass window 210 is directly sealed by selective heating, without the use of a glue. The process of selective heating will be discussed in more detail herein after. Window 210 in this example is a convex lens. The cap has a circular opening 214 allowing light to pass through to window 210. Circular opening 214 is centered on the optical axis Δ of the variable lens, and is on a plane perpendicular to the optical axis Δ.

The sheet metal of the metal cap 208 has been molded or pressed into a shape having a number of portions rotationally symmetric to optical axis Δ. Moving outwardly from the optical axis, the metal cap 208 comprises an annular flat portion 216 surrounding the opening 214 and being preferably perpendicular to the optical axis Δ. The inner surface of portion 216 contacts the outer surface of window 210, and both edges 216 and 218 are sealed directly to window 210 by a physical and chemical bond resulting from the selective heating of the lens/metal interface. The outer edge of portion 216 is curved to form an edge 218 that extends approximately at right-angles to portion 216, parallel to the optical axis Δ and extending from portion 216 towards the base portion 206. This edge also preferably contacts with fixed lens 210. According to this embodiment, from edge 218, a substantially "S" shaped portion 220 extends away from optical axis Δ, linking edge 218 to a further annular flat portion 222 that preferably extends at least substantially perpendicular to optical axis Δ. This "S" shaped portion 220 is designed to allow some movement of window 210 when pressure is exerted by fluids inside the lens, but only movement in a direction parallel to the optical axis Δ.

A substantially right-angled bend from portion 222 links to an annular portion 224 extending at least substantially parallel to optical axis Δ, which forms the outer rim of the lens, surrounding the gasket 204 and base portion 206. The end part of portion 224, which is the outer edge of the metal sheet forming the metal cap 208, is preferably inwardly curved at region 226 towards the optical axis Δ by crimping such that it holds the gasket 204 and base portion 206 in place. This crimping is preferably performed around the entire circumference of the lens. Crimping this edge provides the required pressure between the cap and base portion, while keeping the manufacturing process simple and low cost.

Thus metal cap 208 preferably comprises a raised central housing formed from portions 216 and 218 for receiving the glass window 210, and a larger lower housing formed from portions 222 and 224 for receiving the gasket 204 and base portion 206. Most preferably these housings are separated by the "S" shaped portion 220.

Gasket 204 is preferably formed of a polymer and is annular and substantially "L"-shaped in cross section, such that an outer surface of a first leg or limb 228 of the "L" lies in contact with and parallel to the inner surface of annular flat portion 222 of the metal cap 208, and an outer surface of a second leg or limb 230 of the "L" lies in contact with and parallel to the inner surface of rim portion 224 of the metal cap 208. The inner surfaces of the first and second limbs 228, 230 contact surfaces of the base portion 206 as will be explained in more detail below. A region 232 at the end of the second limb 230 is curved inwards towards the optical axis Δ by pressure applied by crimped region 226 of the metal cap 208, and the inner surface of gasket 204 at this point applies pressure on a corner of the base portion 206, holding it in place. End surface 234 of first limb 228 faces the optical axis Δ, and is exposed to the inner chamber of the lens.

Base portion 206 preferably comprises an annular electrode 236, formed of a conducting material, for example a metal, to which a disc shaped glass window 238, in this example a convex lens, positioned generally perpendicularly to optical axis Δ, is sealed by selective heating without the use of a glue. An opening 242 is formed in the annular electrode 236, centred on optical axis Δ, to allow light to pass through glass window 238, to or from the lens. The glass window 238 is positioned on the outside of this opening. The annular electrode 236 is molded or machined in a ring shape having a number of surfaces that are preferably rotationally symmetric to optical axis Δ which will now be described in more detail.

The inner edge 244 of the annular electrode 206 surrounding opening 242 is preferably an inclined surface, for example at approximately 45 degrees to the optical axis, facing up into the lens. Adjacent to and surrounding edge 244 is an annular flat portion 246, generally perpendicular to optical axis Δ, and adjacent to this is a further inclined edge 248 again facing into the lens, and approximately parallel to edge 244. Adjacent to inclined edge 248 and surrounding it is an annular flat surface 250, an inner part of which is exposed to the inner chamber of the lens, and an outer part of which provides a first contact surface in contact with the inner surface of limb 228 of gasket 204. Adjacent to surface 250 is an edge surface 252, generally parallel to optical axis Δ, which preferably provides a second contact surface in contact with the inner surface of limb 230 of gasket 204. An annular flat outer surface 254 adjacent to surface 252 faces out from the lens and extends back towards the optical axis Δ. The generally right-angled corner between edge surface 252 and outer surface 254 is the corner that preferably contacts the inner region of gasket 204, that is curved by crimped region 226 of the metal cap 208. A further surface 256 adjacent to outer surface 254 extends out from the lens, generally parallel to optical axis Δ, and adjacent to surface 256 an annular surface 258 that is generally perpendicular to optical axis Δ extends inwardly towards the optical axis Δ. A radially inward facing surface 260 extends generally parallel to the optical axis Δ adjacent to surface 258 and extends back towards the inner chamber of the lens. Surface 260 is adjacent to an annular flat surface 262, generally perpendicular to optical axis Δ, which terminates at edge 244 at the inner edge of the annular electrode. Surfaces 260 and 262 are directly sealed to glass window 238.

Thus annular electrode 236 preferably comprises contact surfaces 260, 262 for receiving glass window 238, an inclined edge 244 for receiving a drop of a first fluid as will be explained in more detail below, first and second contact surfaces 250, 252 for contacting with the inner surfaces of gasket 204, and a corner between surfaces 252 and 254 for contacting with the curved portion 232 of gasket 204, thereby holding the annular electrode 236 in place.

Although not shown in figure 2, device 200 contains first and second immiscible fluids within the inner chamber formed between the windows 210 and 238. A drop of a first fluid, which is a dielectric, is positioned covering the opening 242 of electrode 236 on the surface of glass window 238. This fluid for example comprises oil. The edges of the drop preferably fall within a part of surface 244 of electrode 236. Surface 244, which is rotationally symmetrical to the optical axis Δ of the device, centers the drop of the dielectric fluid with optical axis Δ. A second fluid, which is conducting and for example comprises water mixed with an electrolyte such as a salt, fills the remaining volume of the chamber. Neither of the first and second fluids makes direct contact with the exposed surfaces of electrode 236 which have been covered with an insulating layer. The conducting fluid contacts the "S" shaped region 220 of the metal cap 208 which is exposed to the inner chamber, making electrical contact therewith.

In operation, the lens functions in similar fashion to the device of figure 1. A voltage, which is preferably oscillating, is applied between electrode 236 and the metal cap 208, the metal cap 208 functioning as the second electrode and making contact with the conducting fluid. According to the electrowetting effect, this voltage alters the wettability of surface 244 of the annular electrode 236 by the conducting fluid, causing more or less of surface 244 to contact the conducting fluid. The movement of the conducting fluid causes a reciprocal movement of the insulating fluid, thus altering the curvature of the interface between the two fluids. The first and second fluids have different refractive indexes such that light is refracted at their interface. Light passes through windows 210 and 238, passing through the interface between the fluids. In this embodiment it is not necessary for the electrode 236 to extend across the glass surface of window 238 under the drop as is the case with electrode 110 in figure 1, as the edge of the interface is not designed to leave edge 244.

The seals between the glass windows 210, 238 and the cap and base portions respectively are required to be very strong in order to contain the first and second fluids without any leakage.

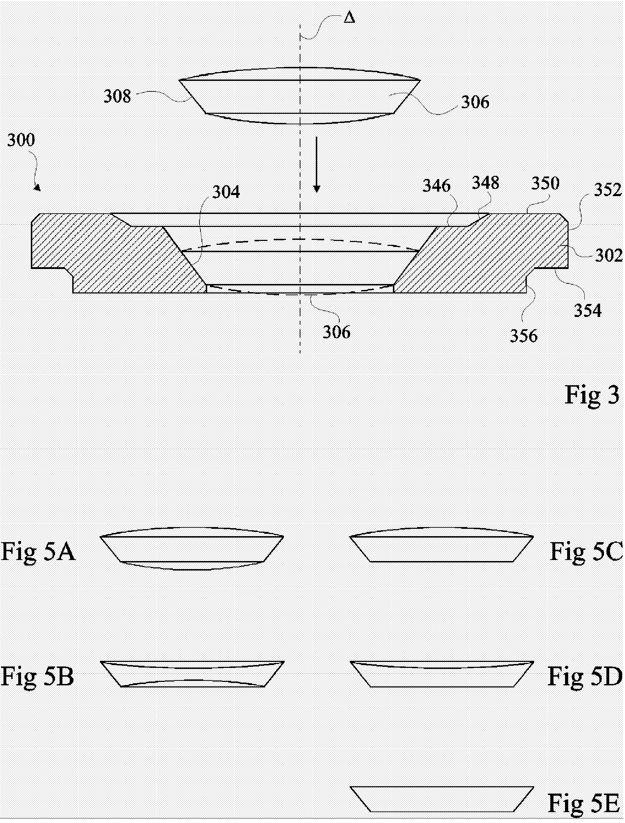

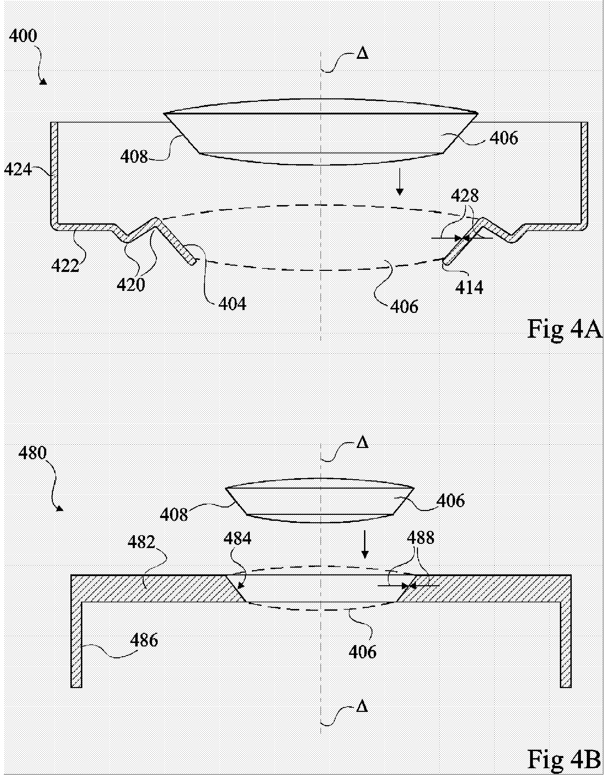

A method of directly sealing the windows of an optical device to the base and cap portions will now be described with reference to figures 3 and 4.

The lenses 210 and 238 are preferably sealed to the metal cap 208 and the annular electrode 236 separately from each other, and then assembled together with the gasket 204. Figure 3 illustrates a process in which a lens is sealed to a base portion.

Referring to figure 3, a base portion 300 comprises an annular electrode 302 having a housing 304 for receiving a lens 306. The base portion 300 and lens 306 are different from the base portion 206 and lens 238 of figure 2, in that the housing 304 for lens 306 comprises a single inclined surface, an inner part of which is for receiving lens 306, and an outer part of which is for centering the drop of the insulating liquid. However, the same method described below may be used to directly seal the lens 238 to the annular electrode 236 of figure 2.

The surface of housing 304 is inclined at approximately 45 degrees to the optical axis Δ of the lens. The outer edge 308 of lens 306 is also inclined at an angle of approximately 45 degrees to its optical axis, such that edge 308 forms part of a conical shape that fits into the housing 304 contacting the surface of the housing. As both the surface of the housing 304 and the edge 308 of lens 306 are rotationally symmetrical to the optical axis Δ, this arrangement automatically centers the lens 306 with the annular electrode 302 and thus the liquid drop. The lens position of lens 306 once inserted into annular electrode 300 is shown by dashed lines in figure 3.

The surface of housing 304 of base portion 300 replaces inclined surface 244 and lens housing surfaces 260 and 262 of annular electrode 236 of figure 2. The remaining surfaces of annular electrode 302, labelled 346, 348, 350, 352, 354 and 356 are the same and perform the same functions as surfaces 246, 248, 250, 252, 254 and 256 respectively of annular electrode 236 and will not be described again here.

Once in position, lens 306 is sealed to the annular electrode 302. This is performed by heating the annular electrode 302, and in particular the housing 304, to a sufficient temperature such that the edge 308 of the lens 306 in contact with housing melts and causes a chemical bond there between. The selective heating of lens 306 is preferably performed by heating only the base portion 300, for example by an induction of high frequency electrical current within the base portion 300, which is possible as base portion 300 is formed of a metallic alloy. For this, base portion 300 is preferably placed within the induction coil of a high frequency electrical generator. By adjusting both electrical power and frequency of the current in the induction coil, the intensity of the induced current and therefore the heating rate of the annular electrode 302 can be accurately controlled. Furthermore, the temperature of the annular electrode 302 can be adjusted such that it is correct for providing a softening of the edges of the transparent lens in order to create a physical and chemical bond with the housing 304 without causing a softening of the central part of lens 306 which would deform the optical characteristics of lens. This is possible due to a thermal bridge provided by the tight housing of the lens, such that softening of the glass starts at the edge of the lens, whilst the centre remains solid. Assuming that the lens 306 is glass, and the annular electrode is made of steel, a temperature of approximately 500°C is required at the interface between the lens 306 and housing 304. The interface must be heated up to a temperature where the glass reaches a viscosity ranging between 10^{6.6} and 10 Pascal seconds (Pa.s) in order to allow the quick formation of a strong chemical bond with the metal. This chemical bond results from a diffusion of chromium from the metallic surface to the glass. A low viscosity of the glass is needed to enhance the diffusion mechanisms. Upon cooling, the required chemical bond will be formed.

In alternative embodiments, base portion 300 could be made of an alternative material to metal, such as a type of glass, a ceramic, a glass-ceramic or a polymer, which are insulating materials. In this case, a thin metallic film, deposited as a shield on the surface of the base portion 300, is needed to provide an electrode for allowing the electrowetting phenomenon. Sealing a window to such a base portion can be achieved by depositing a further thin film of an alloy having a low melting temperature, for example indium (In) alloys or AuSn alloys on the edge 308 of the window 306. The thickness of this metallic film is preferably in the micron range as this provides a better control of the sealing process. This thin metallic film is preferably deposited on the surface of housing 304 of the base portion 300, and/or on edge 308 of the lens 306. This conducting film can then be selectively heated by induction as described above, causing a local heating of the edge 308, and thus forming a physical and chemical bond between the edge 308 of the lens and the surface 304 of the annular electrode 302, without melting central areas of lens 306 which would deform the optical characteristics of the lens. In alternative embodiments, the thin metal shield deposited to form the electrode can also provide the dual role of providing the conductive film for selectively heating the edges of the lens by induction of a current.

Rather than using an induction coil, a laser or other means could be used to selectively heat the interface between the lens 306 and the housing 304 to the required temperature to create the bond.

Figures 4A and 4B show alternative embodiments of caps to which windows are directly sealed. Figure 4A shows a first embodiment of a metal cap 400. Cap 400 is similar to cap 202 described above, however the lens housing is adapted to allow a lens with an inclined outer edge to be fitted. Cap 400 is formed from a thin sheet of conducting metal to which a circular glass window 406 is directly sealed by selective heating, without the use of a glue. Window 406 in this example is a convex lens. The cap has a circular opening 414 allowing light to pass through to window 406. Circular opening 414 is centered on the optical axis Δ of the variable lens. The sheet metal of the metal cap 400 has been molded or pressed into a shape having a number of portions rotationally symmetric to optical axis Δ. Moving outwardly from the optical axis, the metal cap 400 comprises a housing 404 inclined at approximately 45 degrees to the optical axis, such that the edge of the window 406 fits perfectly within the housing. Surface 404 contacts the outer edge 408 of window 406 and both edges are sealed directly by a physical and chemical bond resulting from the selective heating of the lens/metal interface as already described above.

The outer edge of the housing 404 links to a substantially "S" shaped portion 420 extending away from optical axis Δ, linking housing 404 to a further annular flat portion 422 substantially perpendicular to optical axis Δ. This "S" shaped portion 420 is designed to allow some movement of window 406 when pressure is exerted by fluids inside the lens, but only movement in a direction substantially parallel to the optical axis Δ. A right-angled bend from portion 422 links to an annular portion 424 parallel to optical axis Δ, which forms the outer rim of the lens. The end part of portion 424 will be crimped to the base portion around the entire circumference as already described. Arrows 428 in figure 4A illustrate the stress between the lens 406 and the housing 404 as the lens cools, which will be described in more detail below.

Figure 4B illustrates an alternative embodiment of a cap 480. Cap 480 comprises a top planar portion 482 perpendicular to the optical axis Δ and having a circular cutout forming a housing 484 for receiving lens 406, which is the same lens described in relation to figure 4A. Housing 484 comprises an edge inclined at approximately 45 degrees with respect to the optical axis Δ, and thus makes a tight contact with inclined edge 408 of lens 406 when inserted in the housing. The housing 484 of cap 480 is different from housing 404 of cap 400 in that it faces out from the lens. Cap 480 comprises an annular surface 486 parallel to optical axis Δ which forms the outer rim of the lens. The end part of portion 486 will be crimped to base portion 300 around the entire circumference as already described. Arrows 488 in figure 4B illustrate the stress between the lens 406 and the housing 484 as the lens cools, which will be described in more detail below.

Figures 5A, 5B, 5C, 5D and 5E illustrate side views of convex, concave, plan convex and plan concave lenses, and a planar window respectively. It would be possible to insert and directly seal any of these windows into a base portion 300 and cap portion 400, such that the required optical characteristics of the lens can be achieved. In some cases the windows of the base portion and the cap portion are planar windows as shown in figure 5E having parallel surfaces such that they have neutral optical characteristics.

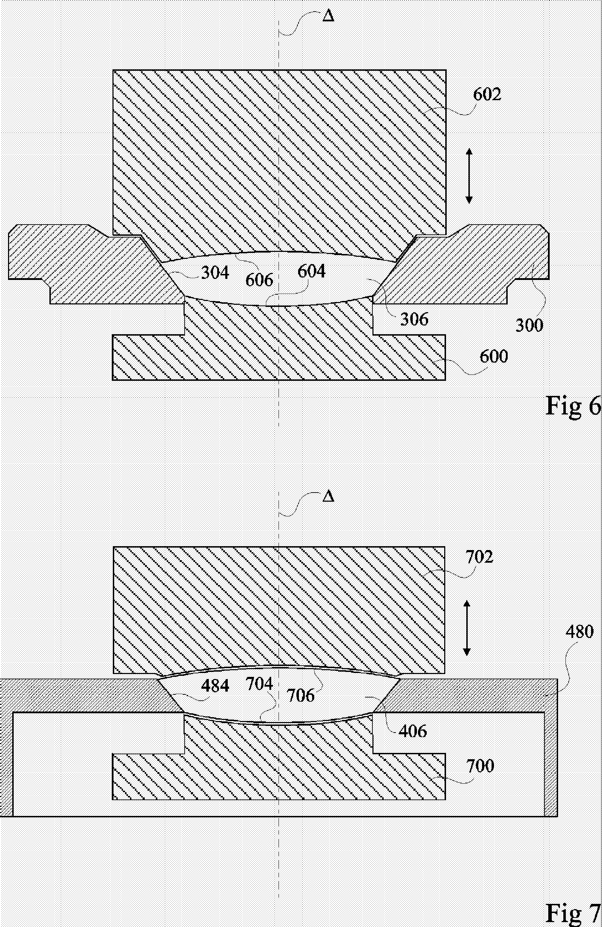

Figures 6 and 7 illustrate an alternative method of forming lenses 306 and 406 within the respective base portion 300 and cap portion 400. Lenses can be formed by classical cutting and polishing, or molding, and then be assembled in the optical device as described above. Alternatively, as will now be described, rather than forming lenses 306 and 406 separately these lenses can be over-molded in position in the base and cap respectively.

Referring to figure 6, lens 306 is over molded by providing a first half-mold 600 and a second half-mold 602. First half-mold 600 is preferably fixed in position with respect to base portion 300, and a surface 604 of the half-mold 600 is positioned in a correct position to form the outer surface of lens 306. Surface 604 is part of an imaginary sphere having a radius R1, the radius R1 determining the curvature of surface 604. The centre of the imaginary sphere is positioned on the optical axis Δ of the device, one side or the other of surface 604, depending on whether a convex or a concave lens surface is required. If R1 of the imaginary sphere is infinite, the mold provides a flat surface to the lens.

Half-mold 602 is a preferably a mobile half-mold, and has a surface 606 for forming the inner surface of lens 306. This surface 606 has a radius R2. Again R2 is the radius of an imaginary sphere, and by varying R2 and the location of the centre of the sphere, a flat window, or any of the convex or concave lenses shown in figures 5A to 5E of various strengths can be achieved. Mobile half-mold 602 can move along the optical axis Δ of a device.

To form lens 306, the fixed half-mold 600 is placed in the required position with respect to the base portion 300 for forming the outer surface of the lens. A glass bead is placed on surface 604 of half-mold 600, and mobile half-mold 602 is placed in a position in contact with the glass bead. The glass bead is of a required size for forming lens 306, and is of a transparent material which is for example an organic or mineral glass chosen for its optical characteristics, such as its index, dispersion and transmission, and its thermal properties, such as its flowing temperature, its coefficient of thermal expansion, and its viscosity versus temperature curve.

Pressure is then applied to mobile half-mold 602 to push it along the optical axis Δ towards the fixed half-mold, and the two half-molds are heated to a first temperature which is within a range such that the glass bead starts to flow due to the heat and the pressure asserted by the mobile half-mold 602. For a glass lens this temperature is approximately 300°C to 500°C, depending on the glass which is used. Once the glass bead has softened into approximately the required shape and its edges have come into contact with the surface of housing 304 of the base portion 300, the base portion 300 is selectively heated to a second temperature, which is for example 500°C. This second temperature is sufficiently hot to cause a physical and chemical bond between the glass of the lens and the metal contact surface of the base portion 300. Selective heating is performed using an induction coil as described above in relation to figures 3 and 4. After cooling at an appropriate rate, a tight seal remains between the lens 306 and the base portion 300.

If the half-molds are electrical conductors, heating of the glass, up to the flowing temperature is preferably achieved by induction of high frequency electrical current through the half-molds 600, 602 by placing the half-molds inside an induction coil and driving a high frequency electrical current through the induction coil.

Selective heating of the glass through electrical induction within the two half-molds allows keeping the metallic part at a relatively low temperature which limits its dilation and therefore problems related to differential dilation of glass and metal.

Referring to figure 7, lens 406 of the cap portion 480 can be over-molded directly in place in a very similar fashion to lens 306 of the base portion. A fixed half-mold 700 is provided for forming the inner surface of the lens and a mobile half-mold 702 is provided for forming the outer surface of the lens. Half-mold 700 comprises a surface 704 having a curved surface for forming this inner surface. As with surface 604, surface 704 is part of the surface of an imaginary sphere having a radius R1, the radius R1 and the location of the centre of the sphere determining the curvature of this surface. Mobile half-mold 702 is able to move along the optical axis Δ of the lens. Half-mold 702 comprises a surface 706 for forming the outer surface of lens 406. As with surface 606, surface 706 is part of an imaginary sphere having a radius R2, the value of R2 and the position of the centre of the sphere determining the curvature of surface 706.

Lens 406 is formed by heating half-molds 700 and 702 and applying pressure to mobile half-mold 702 in the same way as described above in relation to figure 6. The lens 406 is also sealed to the housing 484 in the same fashion.

Thus, a liquid optical device has been described having two lenses fixed in position using direct sealing, by selectively heating a housing for each lens. By heating only the edges of the lens to a temperature required to create a physical and chemical bond between the lens and its housing, the region of the lens close to the optical axis is not deformed, and therefore the optical characteristics of the lens are maintained. Traditional heating of the lens and housing at a temperature necessary to achieve the bonding between the lens and its housing, for example in an oven, would not be successful as this would result in the entire lens flowing, destroying the optical characteristics of the lens. Selective heating is performed by either heating the housing, or by heating a metal film applied to the edges of the lens and of the surfaces of the housing.

The edges of the lens are preferably conical in shape, and a surface of the housing for contact with the edges of the lens is also preferably inclined. This has a number of advantages. Firstly, by having a surface of the housing that is rotationally symmetrical to the optical axis of the lens, the lens is automatically centered in the device when placed in position. In particular, a centering of the axis of the lens to within a tolerance in the micron range is possible. Secondly, the inclined surface of the housing acts to control the positioning of the lens within the device along the optical axis of the device. This is important as this affect the strength of the lens, and also, in the case of a variable focus liquid lens, the location of the inner edge of the lens is very important for having the right quantities of liquid in the lens. Furthermore, it is likely, particularly if the lens is glass and the housing metal, that the lens and housing have different thermal coefficients of expansion (TCE). Thus, as the lens and housing cool, thermo-mechanical stress appears at the interface between the two materials as soon as the glass starts to stiffen. There can be a large amount of stress if the difference between the TCE of the two materials is high. Therefore, this can lead to a degradation of either the interface or the glass. By providing a surface for contact with the lens that is inclined with respect to the optical axis of the device, the stress is predominantly a compression rather than a sheering stress, and therefore damage to the lens is prevented. This stress is illustrated in figure 4A by arrows 428 and in figure 4B by arrows 488. Whilst it is preferable that a single interface 304 is used for both centering the lens and the drop of fluid, in alternative embodiments two surfaces can be provided, however these can be machined such that they are aligned to a very high accuracy.

By molding the lenses 306, 406 in position, rather than molding or cutting these lenses prior to being placed in position and sealed, the mold can remain in place until the lens has cooled, and therefore deformation of the lens is less likely.

Whereas a variable focus lens having a number of fixed lenses has been described, the principles described herein are applicable to other devices, for example, for optical devices which provide other functions in which fixed lenses or fixed glass windows are required. For example, the same principles could be applied to a variable liquid diaphragm.

Whilst a number of advantageous features of embodiments of the present invention have been described in a few embodiments, it will be apparent to those skilled in the art that any of the features described can be combined in any combination.

Having thus described at least one illustrative embodiment of the invention, various alterations, modifications and improvements will readily occur to those skilled in the art. Such alterations, modifications and improvements are intended to be within the spirit and scope of the invention. Accordingly, the foregoing description is by way of example only and is not intended to be limiting. The invention is limited only as defined in the following claims and the equivalent thereto.

## Claims

1. A method of manufacturing an optical device having a casing that defines a chamber containing first and second immiscible fluids moveable with respect to one another by electrowetting, said method comprising:
positioning a first transparent window (306, 406) in a first receiving means (304, 404) provided in the casing ; and
directly sealing said first transparent window to said first receiving means by locally heating a region of said first transparent window in contact with said first receiving means to a first temperature to achieve a local softening of said region of said first transparent window.

2. The method of claim 1 wherein said local heating of said region of said first transparent window comprises selectively heating said first receiving means to said first temperature.

3. The method of claim 1 further comprising inserting a drop of said second fluid into said chamber, said casing comprising a centering portion (244) arranged to be rotationally symmetrical to an optical axis (Δ) of the device for centering the drop of said second liquid in said chamber with the optical axis.

4. The method of claim 3 wherein said first receiving means and said centering portion are provided by a single surface (304) inclined with respect to the optical axis (Δ) and rotationally symmetrical to said optical axis.

5. The method of claim 1 further comprising positioning a second transparent window (406) in a second receiving means (404) provided in said casing, and directly sealing said second transparent window to said second receiving means by locally heating a region of said second transparent window in contact with said second receiving means to said first temperature to achieve a local softening of said region of said second transparent window.

6. The method of claim 1 wherein said first receiving means (304) comprises a film of conducting material in contact with said first transparent window (306), wherein said step of directly sealing said first transparent window comprises heating said film to said first temperature by inducing an electrical current in said film.

7. The method of claim 1 wherein said local heating of said region of said first transparent window comprises placing said first receiving means (304) in an induction coil and driving an electrical current through said induction coil.

8. The method of claim 5 wherein said casing comprises a base portion (300) comprising said first receiving means (304) and a cap portion (400) comprising said second receiving means (404).

9. The method of claim 1 wherein said positioning step comprises directly molding said first transparent window (304, 404) in position within said first receiving means using a mold.

10. An optical device having an optical axis and containing first and second immiscible fluids moveable with respect to one another by electrowetting, said optical device comprising a casing (300, 400) comprising a receiving means (304, 404) for receiving a transparent window (306, 406), said transparent window being directly sealed to said receiving means by locally heating a region of said transparent window in contact with said receiving means to a first temperature to achieve a local softening of said region.

11. The optical device of claim 10 wherein said device is a liquid variable focus device comprising a drop of said second fluid, and wherein said casing comprises a centering portion (244) arranged rotationally symmetrically to an optical axis (Δ) of the device for centering the drop of said second liquid with said optical axis.

12. The optical device of claim 11 further comprising a surface (304) inclined with respect to said optical axis (Δ) and rotationally symmetrical to said optical axis, said surface forming both said receiving means (304) and said centering portion (304) whereby upon directly sealing said transparent window (306) to said receiving means, said transparent window (306) is aligned with respect to said drop of said second liquid.

13. The optical device of claim 10 wherein said transparent window comprises a fixed lens.

14. The optical device of claim 10 wherein said transparent window is integrally formed in place within said receiving means.

15. The optical device of claim 10 wherein said receiving means comprises a beveled surface.

16. The optical device of claim 15 wherein said transparent window has a beveled edge that fits tightly in the beveled surface of the receiving means.

17. A camera comprising the optical device of claim 10.
